# EUROPEAN PATENT APPLICATION

(11) **EP 4 799 460 A1**
(43) Date of publication of application: **02.09.2026**
(21) Application number: 25222124.7
(22) Date of filing: 10.12.2025
(51) Int. Cl.: A01D 34/00, B60L 53/14, B60L 53/36

(54) **ENHANCED ROBOTIC LAWN MOWER INTERACTION STATION MARKING ARRANGEMENT**

(30) Priority: 27.02.2025 SE 2550185
(71) Applicant: Husqvarna AB, 561 82 Huskvarna (SE)
(72) Inventor: Bengtzohn, Johan, 561 82 Huskvarna (SE); Mattsson, Olof, 561 82 Huskvarna (SE); Hecktor, Ulrik, 561 82 Huskvarna (SE)

(57) **Abstract**

The present disclosure relates to a robotic lawn mower interaction station (200) adapted to receive a robotic lawn mower (100), where the interaction station (200) comprises a charging tower (201) that has a charging transmission arrangement (210) and is positioned on a ground plate (202). The interaction station (200) further comprises at least one marker (220, 221, 222) that is positioned to be readable by a robotic lawn mower camera arrangement (170) when the robotic lawn mower (100) is approaching the interaction station (200). Furthermore, the marker (220, 221, 222) is positioned behind a protective layer (223, 224) having such properties that the marker (220, 221, 222) is readable by the robotic lawn mower camera arrangement (170), through the protective layer (223, 224).

## Description

### TECHNICAL FIELD

The present disclosure relates to a robotic lawn mower interaction station adapted to receive a robotic lawn mower, where the interaction station comprises a charging tower that has a charging transmission arrangement and is positioned on a ground plate.

### BACKGROUND

Robotic lawn mowers, such as for example robotic lawn mowers, are becoming increasingly more popular. A robotic lawn mower is usually battery-powered by means of a rechargeable battery and is adapted to cut grass on a user's lawn automatically. A robotic lawn mower can be charged automatically without intervention of the user, and does normally not need to be manually managed after being set once. When the need for charging arises, the robotic lawn mower automatically travels to a charging station, generally a robotic lawn mower interaction station, and docks with the charging station such that a lawn mower charging interface makes electrical connection with a charging connector at the charging station.

In a typical deployment a work area, such as a garden, park, sports field, golf court and the like, the work area is enclosed by a boundary that can be in the form of a boundary wire with the purpose of keeping the robotic lawn mower inside the work area. An electric control signal may be transmitted through the boundary wire thereby generating an (electro-) magnetic field emanating from the boundary wire.

Alternatively, or as a supplement, the robotic lawn mower can be equipped with a navigation system that is adapted for satellite navigation by means of GPS (Global Positioning System) or some other Global Navigation Satellite System (GNSS) system, for example using Real Time Kinematic (RTK). A boundary is in this case not defined by a physical wire, but by a virtual boundary.

Traditionally a robotic lawn mower uses the boundary wire and/or other navigation systems for roughly locating the charging station. So-called F-and N-fields, magnetic fields emanating from wires co comprised in the charging station, are used to communicate with the mower for the last sequence of the docking procedure for a precise docking such that electrical connection can be made between the lawn mower charging interface and the charging connector at the charging station.

When using vision technology, the robotic lawn mower uses a vision system comprising a camera for roughly locating the charging station. For the last sequence of the docking when the robotic lawn mower is close to the charging station, the camera could be used, instead of the F- and N-field, for the precise docking, which eliminates all parts involved in creating and detecting the F- and N-field. To enable a sufficiently precise docking, the charging station may be provided with markers or identifiers. These enable the vision system to obtain necessary distance and position information to enable a sufficiently precise docking.

It is desired to provide robust and easily readable markers or identifiers such that a sufficiently precise docking always is enabled.

### SUMMARY

The object of the present disclosure is to provide robust and easily readable markers or identifiers on a lawn mower interaction station such that a sufficiently precise docking always is enabled.

This object is achieved by means of a robotic lawn mower interaction station adapted to receive a robotic lawn mower, where the interaction station comprises a charging tower that has a charging transmission arrangement and is positioned on a ground plate. The interaction station further comprises at least one marker that is positioned to be readable by a robotic lawn mower camera arrangement when the robotic lawn mower is approaching the interaction station. The marker is positioned behind a protective layer having such properties that the marker is readable by the robotic lawn mower camera arrangement, through the protective layer.

This means that the marker is protected by wear, for example due to ultraviolet (UV) light and other environmental wear factors, as well as due to physical interaction with objects such as contact with the robotic lawn mower and user handling.

According to some aspects, the protective layer is formed in a material that is transparent for light in the infrared (IR) spectrum, and opaque for light in the visual spectrum.

In this way, the marker is not visible for a user while being visible for the robotic lawn mower camera arrangement when being adapted to detect light in the IR spectrum. Then a more aesthetically appealing interaction station is provided.

According to some aspects, the protective layer is formed in a plastic material. This means that the protective layer can be formed in an unexpensive material and be easily attached and, if necessary, easily replaced.

According to some aspects, at least one marker is positioned on the charging tower. In this way, the marker is easily readable for the robotic lawn mower camera arrangement

According to some aspects, the charging tower has a lateral extension and a vertical extension that is perpendicular to the lateral extension. The interaction station comprises at least two markers that are separated by a lateral distance along the lateral extension.

According to some aspects, the charging tower has a lateral extension and a vertical extension that is perpendicular to the lateral extension. The interaction station comprises at least two markers that are separated by a vertical distance along the vertical extension.

This means that the markers can be configured in many different ways, such that an efficient identification and precise docking procedure can be performed.

This object is also achieved by means of a robotic lawn mower system that is associated with the above advantages.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated. Further features of, and advantages with, the present disclosure will become apparent when studying the appended claims and the following description. The skilled person realizes that different features of the present disclosure may be combined to create embodiments other than those described in the following, without departing from the scope of the present disclosure.

### BRIEF DESCRIPTION OF THE DRAWINGS

The present disclosure will now be described more in detail with reference to the appended drawings, where:
- Figure 1: shows a perspective front view of a robotic lawn mower;
- Figure 2: shows a top view of a robotic lawn mower system;
- Figure 3: shows a schematic overview of the robotic lawn mower;
- Figure 4: shows a schematic side view of a robotic lawn mower that is about to dock with a robotic lawn mower interaction station;
- Figure 5: shows a schematic front view of a robotic lawn mower interaction station with visible markings;
- Figure 6: shows a schematic front view of a robotic lawn mower interaction station with non-visible markings;
- Figure 7: shows a detailed schematic side view of a charging tower according to a first example; and
- Figure 8: shows a detailed schematic side view of a charging tower according to a second example.

### DETAILED DESCRIPTION

Aspects of the present disclosure will now be described more fully hereinafter with reference to the accompanying drawings. The different devices, systems, computer programs and methods disclosed herein can, however, be realized in many different forms and should not be construed as being limited to the aspects set forth herein. Like numbers in the drawings refer to like elements throughout.

The terminology used herein is for describing aspects of the disclosure only and is not intended to limit the present disclosure. As used herein, the singular forms "a", "an" and "the" are intended to include the plural forms as well, unless the context clearly indicates otherwise.

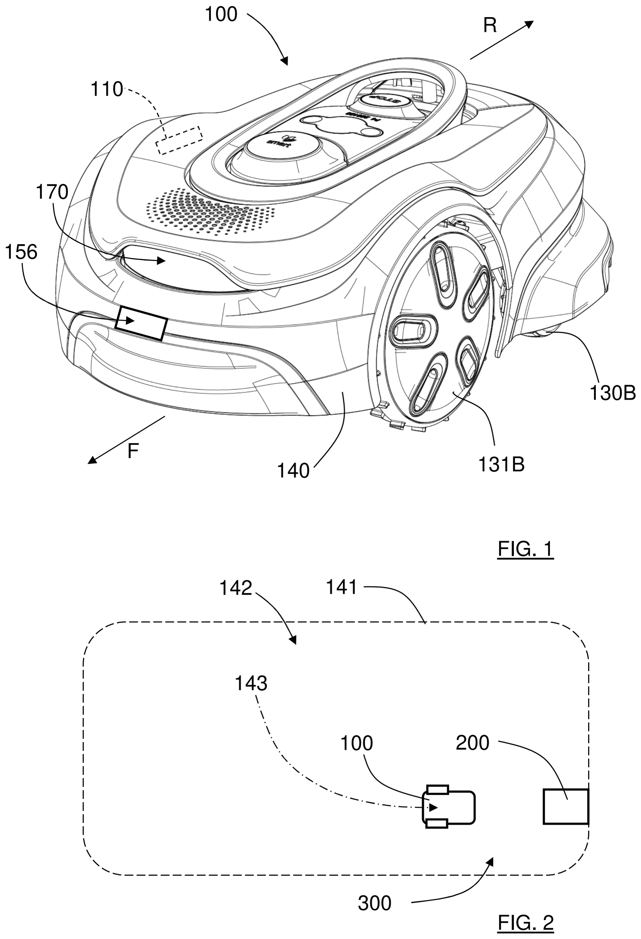

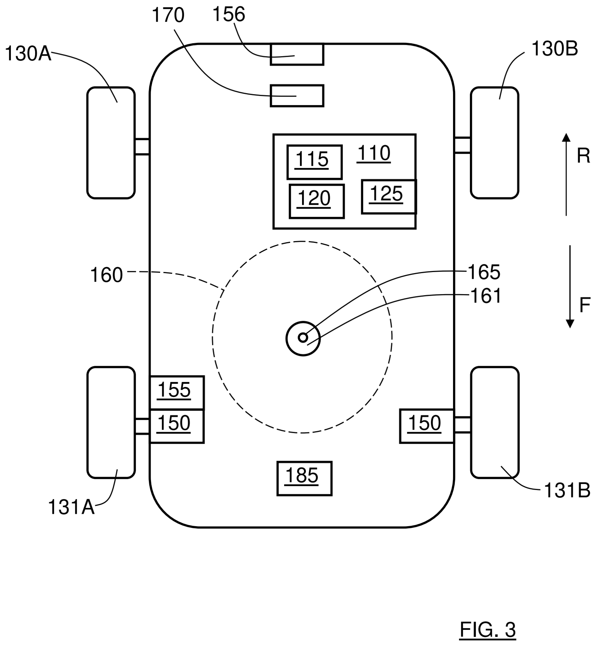

In the following, it is referred to Figure 1, Figure 2 and Figure 3. Figure 1 shows a perspective front side view of a robotic lawn mower 100, Figure 2 shows a schematic top view of a robotic lawn mower system 300, and Figure 3 shows a schematic overview of the robotic lawn mower 100.

The robotic lawn mower 100 comprises a body 140 and is according to some aspects adapted for a forward travelling direction F and a reverse travelling direction R.

The robotic lawn mower 100 further comprises at least one pair of drive wheels 131A, 131B, at least one other wheel 130A, 130B, and at least one rotatable grass cutting disc 160, having a disc rotation axle 165. In this example, the robotic lawn mower 100 comprises two swivelable wheels 130A, 130B. The wheels 130A, 130B; 131A, 131B are adapted to contact ground G during normal operation, where the term normal operation relates to normal operation of the robotic lawn mower 100.

According to some aspects, the rotatable cutting disc 160 is driven by a cutter motor 161, and the drive wheels 131A, 131B are drivably connected to an electric drive wheel motor 150.

According to some further aspects, the robotic lawn mower 100 further comprises a rechargeable electric power source 155, such as a battery 155, adapted to provide power to the electric motors 150, 161 and a charging reception arrangement 156, for example in the form of charging skids 156 (only schematically indicated in Figure 1, Figure 3 and Figure 4). The charging reception arrangement 156 is adapted to be electrically connected to a charging transmission arrangement 210 at a charging station 200 when the robotic lawn mower 100 is docked to the charging station 200. The charging station 200 is generally constituted by a robotic lawn mower interaction station 200.

The robotic lawn mower 100 further comprises a control unit 110 and an environmental detection system that comprises at least one camera arrangement 170. According to some further aspects, the control unit 110 is adapted to control and position the robotic lawn mower 100 by means of input derived from the environmental detection system.

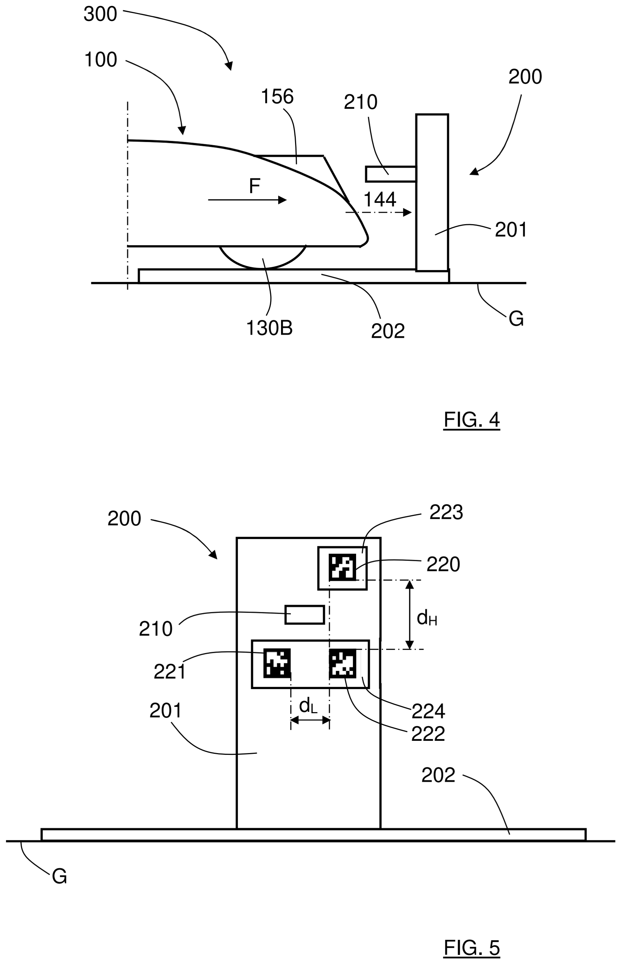

With reference also to Figure 4-7, the present disclosure relates to a robotic lawn mower interaction station 200 adapted to receive a robotic lawn mower 100, for example a robotic lawn mower 100 such as described above.

The interaction station 200 comprises a charging tower 201 that has a charging transmission arrangement 210 and is positioned on a ground plate 202. The interaction station 200 further comprises at least one marker 220, 221, 222 that is positioned to be readable by a robotic lawn mower camera arrangement 170 when the robotic lawn mower 100 is approaching the interaction station 200. According to the present disclosure, the marker 220, 221, 222 is positioned behind a protective layer 223, 224 having such properties that the marker 220, 221, 222 is readable by the robotic lawn mower camera arrangement 170, through the protective layer 223, 224.

This means that the marker 220, 221, 222 is protected by wear, for example due to ultra violet (UV) light and other environmental wear factors, as well as due to physical interaction with objects such as contact with the robotic lawn mower and user handling.

In this example there is a first marker 221 positioned behind a first protective layer 223, and a second marker 221 and a third marker which both are positioned behind a second protective layer 224. This illustrates that there may be several markers, where several markers may be positioned behind one and the same protective layer, as well as single marker positioned behind a protective layer, and of course combinations thereof.

According to some aspects, the protective layer 223, 224 is formed in a material that is transparent for light in the infrared (IR) spectrum, and opaque for light in the visual spectrum.

In this way, the marker 220, 221, 222 is not visible for a user while being visible for the robotic lawn mower camera arrangement 170 when being adapted to detect light in the IR spectrum. Then a more aesthetically appealing interaction station 200 is provided.

According to some aspects, the protective layer 223, 224 is formed in a plastic material. This means that the protective layer 223, 224 can be formed in an unexpensive material and be easily attached and, if necessary, easily replaced. The protective layer 223, 224 can for example be constituted by an adhesive plastic film.

The protective layer 223, 224 can for example be injection-molded as one part or two or more separate parts. In the latter case, flexibility is provided for different models.

According to some aspects, at least one marker 220, 221, 222 is positioned on the charging tower 201. In this way, the marker 220, 221, 222 is easily readable for the robotic lawn mower camera arrangement 170. For a downward-looking robotic lawn mower camera arrangement, a marked could be positioned on the ground plate 202.

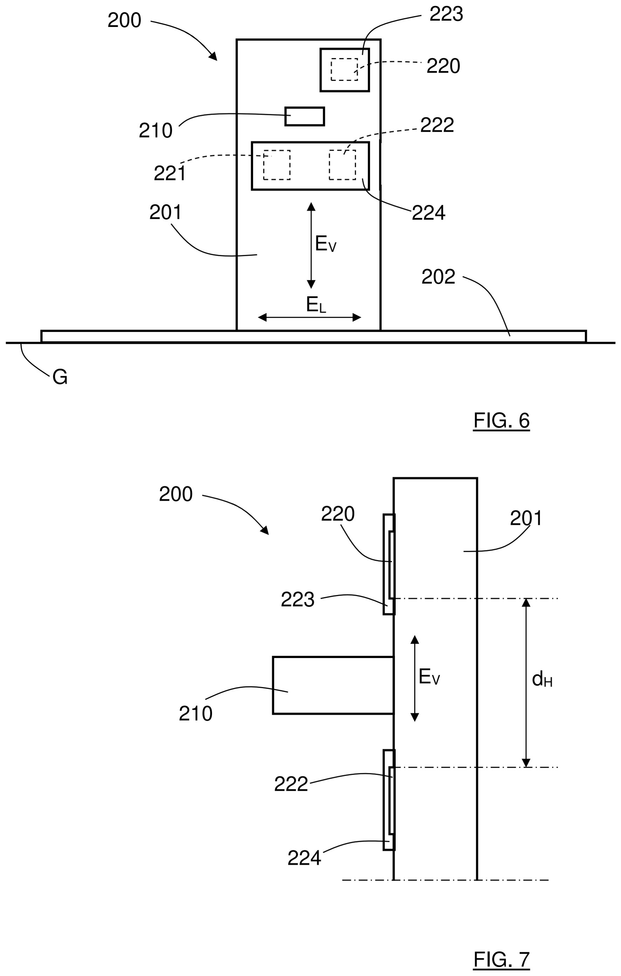

According to some aspects, as in particular shown in Figure 5 and Figure 6, the charging tower 201 has a lateral extension E_{L} and a vertical extension E_{V} that is perpendicular to the lateral extension E_{L}. The interaction station 200 comprises at least two markers 221, 222 that are separated by a lateral distance d_{L} along the lateral extension E_{L}.

In this example, the second marker 221 and the third marker are separated by the lateral distance d_{L} along the lateral extension E_{L}. The second marker 221 and the third marker are here positioned at the same height.

According to some aspects, with further reference to in particular Figure 5 and Figure 6, the charging tower 201 has a lateral extension E_{L} and a vertical extension E_{V} that is perpendicular to the lateral extension E_{L}, the interaction station 200 comprising at least two markers 220; 221, 222 that are separated by a vertical distance d_{V} along the vertical extension E_{V}.

In this example, on the one hand, the first marker 220, and on the other hand, the second marker 221 and the third marker, are separated by the vertical distance dv along the vertical extension E_{V}.

This means that the markers 220, 221, 222 can be configured in many different ways, such that an efficient identification and docking procedure can be performed. The distances between the markers 220, 221, 222 enables the control unit 110 to establish the position of the robotic lawn mower 100 in relation to the interaction station 200 in a precise manner.

According to some aspects, the lateral extension E_{L} can be regarded as a horizontal extension.

The present disclosure also relates to a robotic lawn mower system 300 comprising the robotic lawn mower interaction station 200 as described herein, and a robotic lawn mower 100, for example such as the one described above. In particular, the robotic lawn mower 100 comprised in the system 300 comprises a body 140, at least one rotatable grass cutting disc 160 having a disc rotation axle 165, at least one pair of drive wheels 131A, 131B, at least one other wheel 130A, 130B and a camera arrangement 170 facing a forward travelling direction F. The camera arrangement 170 is adapted to detect light in the infrared (IR) spectrum.

With reference to Figure 1, Figure 2 and Figure 4, according to some aspects, the camera arrangement 170 can for example provide input when the robotic lawn mower 100 navigates within a boundary 141 that encompasses a work area 142. When it is determined that the robotic lawn mower 100 should move to, and dock with, the interaction station 200, first input from the camera arrangement 170 is used for a coarse approach 143 towards the interaction station 200, as illustrated in Figure 2. The first input comprises environmental data such as position of the interaction station 200. Thereafter, second input from the camera arrangement 170 is used for a more precise approach 144 towards the interaction station 200, enabling docking, as illustrated in Figure 4. The second input comprises position data related to one or more markers, for example three markers 220, 221, 222 as shown in Figure 5, enabling the control unit 110 to establish the position of the robotic lawn mower 100 in relation to the interaction station 200 more precisely, enabling a reliable and precise docking to be performed. It should be noted that there is at least one marker.

The present disclosure is not limited to the examples described herein, but may vary freely within the scope of the appended claims. For example, the markers 220, 221, 222 may be covered by the protective layer 223, 224, or molded into the protective layer 223, 224. The markers 220, 221, 222 may according to some aspects be formed in the material of the charging tower 201. Alternatively, the markers 220, 221, 222 and the protective layers 223, 224 may according to some aspects be attached as separate parts to the charging tower 201 as illustrated in Figure 7, showing a first example.

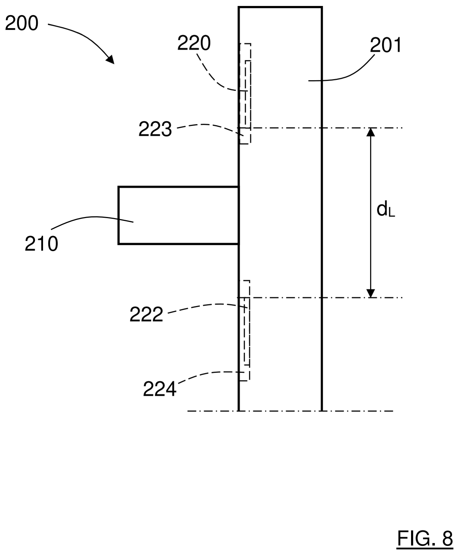

The markers 220, 221, 222 may according to some aspects be formed in an indent in the charging tower 201 such that the protective layer 223, 224 is flush with the surface of the charging tower 201 as illustrated in Figure 8, showing a second example.

## Claims

1. A robotic lawn mower interaction station (200) adapted to receive a robotic lawn mower (100), where the interaction station (200) comprises a charging tower (201) that has a charging transmission arrangement (210) and is positioned on a ground plate (202), the interaction station (200) further comprising at least one marker (220, 221, 222) that is positioned to be readable by a robotic lawn mower camera arrangement (170) when the robotic lawn mower (100) is approaching the interaction station (200), wherein the marker (220, 221, 222) is positioned behind a protective layer (223, 224) having such properties that the marker (220, 221, 222) is readable by the robotic lawn mower camera arrangement (170), through the protective layer (223, 224).

2. The interaction station (200) according to claim 1, wherein the protective layer (223, 224) is formed in a material that is transparent for light in the infrared, IR, spectrum, and opaque for light in the visual spectrum.

3. The interaction station (200) according to any one of the claims 1 or 2, wherein the protective layer (223, 224) is formed in a plastic material.

4. The interaction station (200) according to any one of the previous claims, wherein at least one marker (220, 221, 222) is positioned on the charging tower (201).

5. The interaction station (200) according claim 4, wherein the charging tower (201) has a lateral extension (E_{L}) and a vertical extension (E_{V}) that is perpendicular to the lateral extension (E_{L}), the interaction station (200) comprising at least two markers (221, 222) that are separated by a lateral distance (d_{L}) along the lateral extension (E_{L}).

6. The interaction station (200) according any one of the claims 4 or 5, wherein the charging tower (201) has a lateral extension (E_{L}) and a vertical extension (E_{V}) that is perpendicular to the lateral extension (E_{L}), the interaction station (200) comprising at least two markers (220; 221, 222) that are separated by a vertical distance (dv) along the vertical extension (E_{V}).

7. A robotic lawn mower system (300) comprising the robotic lawn mower interaction station (200) according to any one of the previous clams 1-6, and a robotic lawn mower (100) comprising a body (140), at least one rotatable grass cutting disc (160) having a disc rotation axle (165), at least one pair of drive wheels (131A, 131B), at least one other wheel (130A, 130B) and a camera arrangement (170) facing a forward travelling direction (F), where the camera arrangement (170) is adapted to detect light in the infrared, IR, spectrum.
